# EUROPÄISCHE PATENTSCHRIFT

(11) **EP 1 984 142 B1**
(45) Veröffentlichungstag und Bekanntmachung des Hinweises auf die Patenterteilung: **27.07.2011**
(21) Anmeldenummer: 07726303.6
(22) Anmeldetag: 02.02.2007
(51) Int. Cl.: B23Q 1/34, B23Q 17/09, B23B 29/12

(54) **VORRICHTUNG ZUR REGELUNG DER SPANABHEBENDEN WERKSTÜCKBEARBEITUNG MIT EINSATZ VON PIEZOKERAMISCHEN WANDLERN**
DEVICE FOR CONTROLLING THE MACHINING OF WORKPIECES USING PIEZOCERAMIC TRANSDUCERS
DISPOSITIF DE RÉGULATION DE L'USINAGE DE PIÈCES PAR ENLÈVEMENT DE COPEAUX À L'AIDE DE CONVERTISSEURS PIÉZOCÉRAMIQUES

(30) Priorität: 03.02.2006 DE 102006005483; 07.07.2006 DE 102006031843; 29.01.2007 DE 102007005222
(43) Veröffentlichungstag der Anmeldung: 29.10.2008
(73) Patentinhaber: CeramTec GmbH, 73207 Plochingen (DE)
(72) Erfinder: TZSCHENTKE, Konrad, 91224 Pommelsbrunn (DE); SCHREINER, Hans-Jürgen, 91233 Neunkirchen am Sand-Rollhofen (DE); HANDSCHUH, Kurt, 90542 Eckental (DE); BEN AMOR, Raouf, 73547 Lorch (DE); FRIPAN, Michael, 71522 Backnang (DE)
(74) Vertreter: Uppena, Franz
(86) Internationale Anmeldenummer: PCT/EP2007/051026
(87) Internationale Veröffentlichungsnummer: WO 2007/088198

(56) Entgegenhaltungen:
- WO-A-2005/042195
- WO-A-2005/063437
- DE-A1- 10 229 134
- DE-A1- 19 632 148
- DE-A1- 19 925 193
- DE-C1- 10 044 592
- US-A1- 2005 109 174
- US-A1- 2005 262 975

## Beschreibung

Die Erfindung betrifft den Einsatz von piezokeramischen Wandlern zur Regelung der spanabhebenden Werkstückbearbeitung.

Spanabhebende Schneidwerkzeuge wie Drehmeißel oder Hobelmeißel bestehen in der Regel aus einem Träger oder Schaft, auf dem das Schneidelement in Form einer Schneidplatte befestigt ist. Bei Werkzeugen zum Fräsen ist der Träger, der Fräskopf, wegen der Rotation der Werkzeuge rund und auf dem Umfang mit einer Vielzahl von Schneidelementen bestückt. Während der spanabhebenden Bearbeitung von Werkstücken wirken auf die Schneidwerkzeuge neben den statischen insbesondere dynamische Belastungen. Dadurch wird im Laufe der Zeit der Werkstoff an den Schneidkanten der Schneidelemente in mikroskopisch kleinen Bereichen zerrüttet. Addieren sich diese Bereiche zu makroskopisch großen Bereichen, führt das zu Ausbrüchen an den Schneidkanten und sogar zur Zerstörung des Schneidelements mit der möglichen Folge einer Beschädigung des Werkstücks und damit seiner Unbrauchbarkeit.

Die Zerspankraft, die beim Zerspanvorgang zwischen Werkstück und Schneidwerkzeug wirkt, lässt sich in Kräfte in der Arbeitsebene und Kräfte senkrecht zur Arbeitsebene einteilen. In beiden Ebenen wirken Druckkräfte auf die Schneidkante des Schneidelements, die als Druckkräfte auf den Träger weitergegeben werden. Insbesondere bei Dreh- und Hobelmeißeln entstehen dadurch Biege- und Torsionskräfte im Träger der Schneidelemente, die beim Überschreiten einer bestimmten Höhe zur Abweichung des Schneidelements aus seiner idealen Arbeitsposition führen. Das kann zu Störungen im Arbeitsablauf führen, die sich in erhöhtem Verschleiß des Schneidelements und ungleichmäßigem Lauf der Drehspindel oder des Hobelschlittens widerspiegeln. Auch bei Fräsmaschinen treten diese Erscheinungen bei Biegekräften auf die Antriebswelle des Fräskopfs auf. Im ungünstigsten Fall kommt es zu Rattererscheinungen, die zu einer ungleichmäßigen, welligen Oberfläche des Werkstücks führen und die eine Werkzeugmaschine stark belasten, insbesondere wenn Resonanz auftritt.

Die Zerspankraft bewirkt also eine komplexe Belastung und damit Verformung von Werkzeugmaschine und Werkstück, was bei Überschreiten von Grenzwerten zu erhöhtem Verschleiß des Schneidelements und im ungünstigsten Fall zu seiner Zerstörung führt. Außerdem können durch Überlastung Schäden an der Werkzeugmaschine und Bearbeitungsfehler am Werkstück auftreten.

Damit optimale Arbeitsergebnisse erzielt werden ist es deshalb erforderlich, insbesondere die Parameter Schnittgeschwindigkeit, Vorschub und Zustellung in Abhängigkeit von dem Werkstoff des Schneidelements optimal auf den zu bearbeitenden Werkstoff abzustimmen. Damit die Grenzwerte der möglichen Belastungen nicht überschritten werden ist es deshalb von Vorteil, wenn die auftretenden Kräfte gemessen und überwacht werden.

Aus der DE 103 12 025 A1 ist ein Verfahren zur Kompensation von Fehlern der Positionsregelung einer Maschine, insbesondere einer Werkzeugmaschine, bekannt. Durch Dehnungsmessstreifen an verschiedenen Stellen der Maschine werden die Spannungszustände gemessen und die aus den Bearbeitungskräften oder die aus den Bewegungen resultierenden Trägheitskräfte oder die aus den Gewichtskräften des Querschlittens und/oder des Werkzeugs resultierenden Verformungen berechnet und bei der Positionsregelung kompensiert. Dehnungsmessstreifen eigenen sich aber nicht zur Messung an sich drehenden Teilen wie beispielsweise Fräsköpfen. Außerdem sind Dehnungsmessstreifen wegen ihrer Trägheit für die Messung von Verformungen auf Grund hochfrequenter Schwingungen, wie sie bei der spanabhebenden Werkstückbearbeitung auftreten, nicht geeignet.

In der Patentanmeldung US 2005/0109174 A1 werden ein Verfahren und eine Vorrichtung zur Schwingungskontrolle an einer Werkzeugmaschine zur spangebenden Werkstückbearbeitung beschrieben. In einem Werkzeughalter der Werkzeugmaschine, der mindestens ein Schneidwerkzeug nach dem Oberbegriff von Anspruch 1 trägt, sind mindestens ein Schwingungssensor und ein Aktuator mit einem aktiven Element, jeweils in Form eines Piezoelements, angeordnet. Die Signale des Schwingungssensors werden dazu genutzt, das aktive Element des Aktuators mit einer solchen Wechselspannung als Steuerspannung zu beaufschlagen, dass durch die Änderungen seiner Abmessungen Kontrollschwingungen erzeugt werden, die den durch die Werkstückbearbeitung erzeugten Schwingungen entgegengerichtet sind. Hier wirkt das Signal eines Schwingungssensors direkt auf ein anderes Piezoelement, das auf den Werkzeughalter einwirkt, um die störenden Schwingungen zu eliminieren.

Aus der PCT-Veröffentlichung WO 2005/063437 A1 ist ein Werkzeughalter mit elektrostriktiven Aktorenkörpern zur Beeinflussung des Rundlaufverhaltens des Werkzeughalters bekannt. Der Werkzeughalter ist durch Aktorenkörper gezielt derart verformbar, dass die Masse des Werkzeughalters, inklusive eingespanntem Werkzeug, in einem Verformungszustand der Aktorenkörper möglichst symmetrisch um die ideale Drehachse herum verteilt ist. Dazu werden die Aktorenkörper durch ein Signal eines Piezoelement-Sensors mit einem entsprechenden elektrischen Potential beaufschlagt.

Die Aufgabe der Erfindung besteht darin, die Schneidwerkzeuge von Werkzeugmaschinen zur spanabhebenden Bearbeitung von Werkstücken solcherart mit Sensoren auszustatten, dass die bei der Bearbeitung eines Werkstücks auftretenden Kräfte ermittelt und mit Grenzwerten verglichen werden können, so dass der Bearbeitungsvorgang optimierbar ist und bei Überschreiten von Grenzwerten zur Verhinderung von Schäden durch eine Regeleinrichtung selbsttätig in den Arbeitsablauf eingegriffen werden kann.

Die Lösung der Aufgabe erfolgt nach der Erfindung mit Hilfe der Merkmale des ersten Anspruchs. Vorteilhafte Ausgestaltungen der Erfindung werden in den abhängigen Ansprüchen beansprucht.

Die spanabhebenden Schneidwerkzeuge sind erfindungsgemäß mit piezokeramischen Wandlern in Form von Sensoren und/oder reinen Spannungserzeugern ausgestattet. Aufbau und Wirkungsweise dieser Wandler ist aus dem Stand der Technik bekannt und wird deshalb hier nicht näher erläutert. Erfindungsgemäß erfolgt die Anordnung der piezokeramischen Wandler so, dass die von ihnen jeweils zu erfüllende Funktion optimal erfüllt wird. Die Sensoren und Spannungserzeuger können in direktem Kontakt mit dem Schneidelement in dem Träger beziehungsweise Fräskopf eingesetzt sein. Bei Drehmeißeln und Hobelmeißeln können die Sensoren und Spannungserzeuger auch dort angeordnet werden, wo der jeweilige Träger an der Werkzeugmaschine befestigt ist, zwischen Werkzeughalter und Schneidwerkzeug. Bei Fräsmaschinen können Wandler auch dort angeordnet werden, wo die Welle des Fräsers gelagert ist. Eine Kombination der beiden Anordnungen ist ebenfalls möglich.

Wegen der Befestigung des Schneidelements und der Einspannung des Trägers des Schneidwerkzeugs im Werkzeughalter stehen die piezokeramischen Wandler bereits unter einem bestimmten Druck. Um reproduzierbare Signale der Wandler zu erhalten, ist es erforderlich, nach jedem Wechsel eines Schneidelements oder eines Trägers die Vorbelastung der Wandler zu überprüfen und die Messgeräte entsprechend zu justieren.

Mit piezokeramischen Sensoren werden die auf das Schneidelement bzw. seinem Halter ausgeübten Druck-, Zug- und Scherkräfte festgestellt. Mit Hilfe der erzeugten Piezospannung kann die Höhe der jeweiligen Belastung bestimmt werden. Die Spannungserzeuger werden auf Grund der auf sie einwirkenden Kräfte verformt und erzeugen dadurch eine elektrische Spannung. Diese kann zur Versorgung elektronischer Schaltungen genutzt werden, die beispielsweise beim Fräsen der berührungslosen Übertragung von Signalen zwischen dem Schneidwerkzeug und der Werkzeugmaschine dienen.

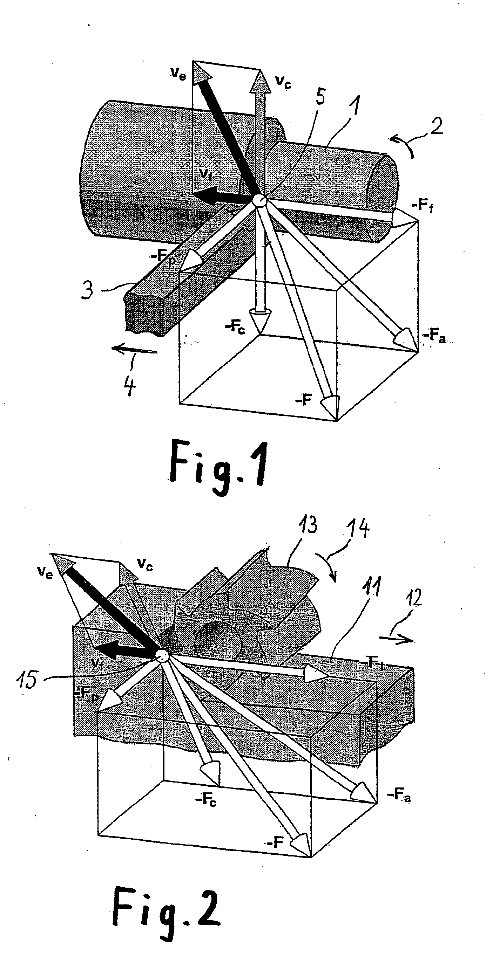

Um die Belastungen von Schneidwerkzeug und Werkzeugmaschine ermitteln zu können, wird die Zerspankraft in ihre Komponenten zerlegt. Dazu wird ein räumliches Koordinatensystem mit seinem Nullpunkt in den Berührungspunkt der Schneidkante des Schneidelements mit dem Werkstück gelegt, wobei die Achsen in der Arbeitsebene und in der Ebene senkrecht zu ihr liegen. Die Zerspankraft wird in Komponenten zerlegt, die in den beiden Ebenen liegen, wie aus den Figuren 1 und 2 ersichtlich. Die Kräfte dort sind so eingezeichnet, wie sie auf das Schneidelement bzw. den Träger wirken. Die Zerspankraft F wirkt auf den Drehmeißel bzw. den Fräser in Richtung -F. Die in Richtung des Trägers wirkende Passivkraft -Fₚ beansprucht das Schneidelement und damit den Träger und den Werkzeughalter auf Druck. Die Aktivkraft -Fₐ kann in die Vorschubkraft -F_{f} und die Schnittkraft -F_{c} zerlegt werden. Die in Längsrichtung des Werkstücks verlaufende Vorschubkraft -F_{f} sowie die senkrecht zu ihr verlaufende Schnittkraft -F_{c} üben jeweils eine Biegekraft auf den Träger aus, wobei die Summe dieser Kräfte in der Drehmaschine zu einer Torsion des Trägers und in einer Fräsmaschine zur Biegung der Antriebswelle des Fräsers führt. Zur Erfassung der Kraftkomponenten sind also mindestens drei Wandler in Form von Sensoren erforderlich. Die Sensoren müssen zur Erfassung der Kräfte in einer Drehmaschine unter dem Schneidelement bzw. dem Träger und, in Vorschubrichtung v_{f} gesehen, vor dem Schneidelement bzw. dem Träger im Werkzeughalter und in Richtung auf das Werkstück gesehen vor dem Schneidelement oder Träger angeordnet werden. Bei einer Fräsmaschine erfolgt die Anordnung unter und hinter den Schneidelementen im Fräskopf und in den Lagern der Antriebswelle des Fräskopfs zur Erfassung der Biegekräfte auf die Welle.

Die zur Erfassung der bei der spanabhebenden Bearbeitung von Werkstücken auftretenden Kräfte eingesetzten Wandler erzeugen auf Grund des ständigen Wechsels der Größe der auf sie einwirkenden Kräfte eine Spannung, die in der Werkzeugmaschine in der Auswerteeinheit eines Rechners kontinuierlich mit vorgegebenen Grenzwerten verglichen wird. Bei einem bekannten Verschleißverhalten der Schneidelemente können durch Einstellen der Parameter Drehzahl des Werkstücks bzw. des Schneidwerkzeugs, Vorschubgeschwindigkeit und Zustellung, also Spantiefe, die auf das Schneidelement einwirkenden Kräfte auf Werte begrenzt werden, die ein optimales Verschleißverhalten ermöglichen. Treten unzulässige Abweichungen auf, kann durch einen Eingriff in den Arbeitsablauf die Störung behoben werden. Beim Drehen können die Werkstückdrehzahl, der Vorschub und die Zustellung des Schneidwerkzeugs und beim Hobeln der Vorschub und die Zustellung verändert werden. Beim Fräsen werden in der Regel die Fräskopfdrehzahl und/oder, je nach Bauart, der Werkstückvorschub oder der Fräskopfvorschub geändert. Das Auftreten von Rattererscheinungen, die sich in einer periodischen Drehzahländerung des Werkstücks bzw. des Fräskopfs und einer periodischen Schwingung des Trägers und sogar des Werkstücks bemerkbar machen, wird durch Änderungen der Drehzahl und/oder des Vorschubs verhindert. Diese Maßnahmen tragen vorteilhaft zu einer erheblichen Verlängerung der Lebensdauer der Schneidwerkzeuge und damit ihrer Standzeit bei und zu einer verbesserten Qualität der bearbeiteten Oberfläche.

Die Erfindung ermöglicht es weiterhin, den Verschleiß der Schneidelemente zu überwachen. Mit zunehmendem Verschleiß ändert sich bei konstantem Vorschub und konstanter Werkstückdrehzahl die Zerspankraft kontinuierlich. Bei Erreichen eines zuvor ermittelten, für das Schneidelement charakteristischen Grenzwert kann davon ausgegangen werden, dass der nutzbare Teil des Schneidelements verbraucht ist und ein Wechsel vorgenommen werden muss. Die Erfindung ermöglicht damit vorteilhaft eine bestmögliche Ausnutzung der Schneidelemente. Auf Grund der vorausberechenbaren Standzeit der Schneidelemente ist es möglich, einen rechtzeitigen Wechsel vorzusehen, der optimal in den Prozessablauf integriert werden kann, beispielsweise zum Zeitpunkt eines Werkstückwechsels.

Kommt es zu einer Beschädigung der Schneidkante oder gar einem Bruch des Schneidelements, macht sich das in einer abrupten Änderung der Zerspankraft bemerkbar. Ein solches Signal kann zur sofortigen Abschaltung der Werkzeugmaschine genutzt werden, um eine Beschädigung des Werkstücks zu vermeiden.

Insbesondere an Fräsmaschinen, wo eine Übertragung von Signalen von dem sich drehenden Fräskopf zum Regelkreis der Werkzeugmaschine und umgekehrt schwierig ist, ist eine drahtlose Übertragung der Signale vorteilhaft. Die Spannungsversorgung des Senders und gegebenenfalls Empfängers am Fräskopf kann durch Piezoelemente erzeugt werden, die zusätzlich zu den vorhandenen Sensoren an derselben Stelle daneben oder darunter angeordnet werden.

Durch die Überwachung der Zustandsdaten der Schneidelemente und der auf die Schneidelemente und deren Träger und somit auf die Werkzeugmaschine wirkenden Kräfte wird es möglich, Überlastungen und auftretende Schwingungen, insbesondere Rattererscheinungen, zu verhindern. Das führt zu stabileren Bearbeitungsabläufen, die wiederum bessere Werkstückqualitäten und höhere Standzeiten der Schneidelemente ermöglichen.

Anhand von Ausführungsbeispielen wird die Erfindung näher erläutert. Es zeigen
- Figur 1:: in einer Prinzipskizze den Verlauf der Kraftvektoren und der Geschwindigkeitsvektoren, die beim Drehen und
- Figur 2:: beim Gegenlauffräsen auftreten,
- Figur 3:: die Anordnung von Wandlern am Schneidelement und im Bereich der Einspannung des Trägers in der Seitenansicht und
- Figur 4:: in der Aufsicht und
- Figur 5:: die Anordnung von Wandlern und einem Signalübertragungselement an einem Stirnfräser.

In Figur 1 sind der Verlauf der Kräfte und der Geschwindigkeiten dargestellt, wie sie beim Langdrehen auftreten. An einem Werkstück 1, das sich in Pfeilrichtung 2 dreht, wird ein Schneidwerkzeug 3 in Pfeilrichtung 4 zum Spanabheben entlanggeführt. In der Schneidenecke des Schneidelements liegt der Nullpunkt 5 eines räumlichen Koordinatensystems. In der Ebene des Systems, in der das Werkstück 1 liegt, liegt die Vorschubrichtung und in der Ebene senkrecht dazu erfolgt die Zustellung des Schneidwerkzeugs 3. Die Bewegungen beim Zerspanvorgang, beim Drehen, Hobeln und Fräsen, sind Relativbewegungen zwischen der Schneide des Schneidelements und dem Werkstück. Sie werden von der Werkzeugmaschine an der Wirkstelle, hier im Punkt 5, erzeugt und sind auf das ruhende Werkstück bezogen. Die Hauptschneide bewegt sich mit der Wirkgeschwindigkeit vₑ entlang dem Werkstück 1, wobei die Zerspankraft -F auf das Schneidelement und damit auf den Träger und letztendlich auf die Werkzeugmaschine wirkt.

Wie bereits beschrieben, lässt sich die Zerspankraft -F in Kräfte in der Arbeitsebene und Kräfte senkrecht zur Arbeitsebene zerlegen. In der Arbeitsebene liegt die Aktivkraft -Fₐ, die maßgeblich für die Berechnung der Zerspanleistung ist, und senkrecht zur Arbeitsebene die Passivkraft -Fₚ, die keinen Beitrag an der Zerspanleistung leistet, aber das Schneidelement, damit das Schneidwerkzeug 3 und letztlich die Werkzeugmaschine auf Druck belastet. Die Aktivkraft -Fₐ kann entsprechend der Vorschub- und Schnittrichtung in der Arbeitsebene in die Komponenten Schnittkraft -F_{c} und Vorschubkraft -F_{f} zerlegt werden, die als Biegungs- bzw. Torsionskräfte auf das Schneidwerkzeug 3 wirken.

Bei dem in Figur 2 dargestellten Zerspanvorgang des Gegenlauffräsens treten dieselben Kräfte wie beim in Figur 1 dargestellten Langdrehen sowie beim Hobeln auf. Der Unterschied besteht allerdings darin, dass sich ein Schneidelement eines Fräsers über die Hälfte des Umfangs des Fräsers mit dem Werkstück im Eingriff befindet und dass das hier gezeigte Koordinatensystem die Kräfteverteilung nur in einem Punkt des Eingriffs wiedergibt. Beim Gegenlauffräsen bewegt sich das Werkstück 11 in Pfeilrichtung 12 unter dem ortsfesten Schneidwerkzeug, einem sich in Pfeilrichtung 14 drehenden. Walzenfräser 13, hindurch. In einem der Eingriffspunkte der Schneidkante des Schneidelements liegt der Mittelpunkt 15 des Koordinatensystems zur Zerlegung der Zerspankraft -F in diesem Punkt.

Die während des Zerspanvorgangs in den Sensoren erzeugten Spannungen sind ein Maß für die jeweiligen Belastungen der Schneidelemente und der Werkzeugmaschine. Beim Überschreiten vorher festgelegter Grenzwerte wird in den Regelkreis der Werkzeugmaschine eingegriffen, indem beispielsweise Vorschub und/oder Drehzahlen verändert werden.

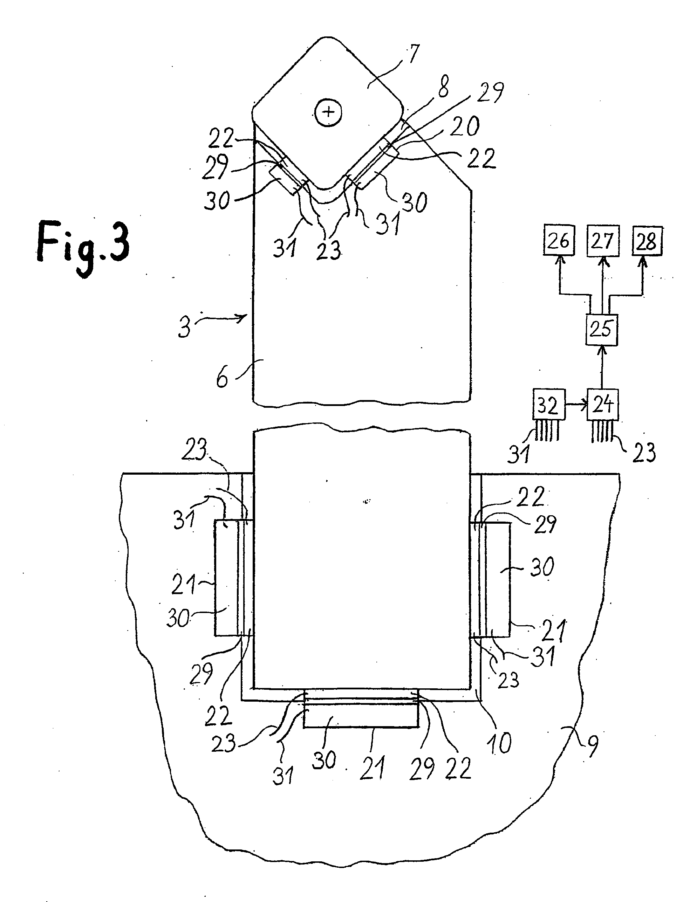

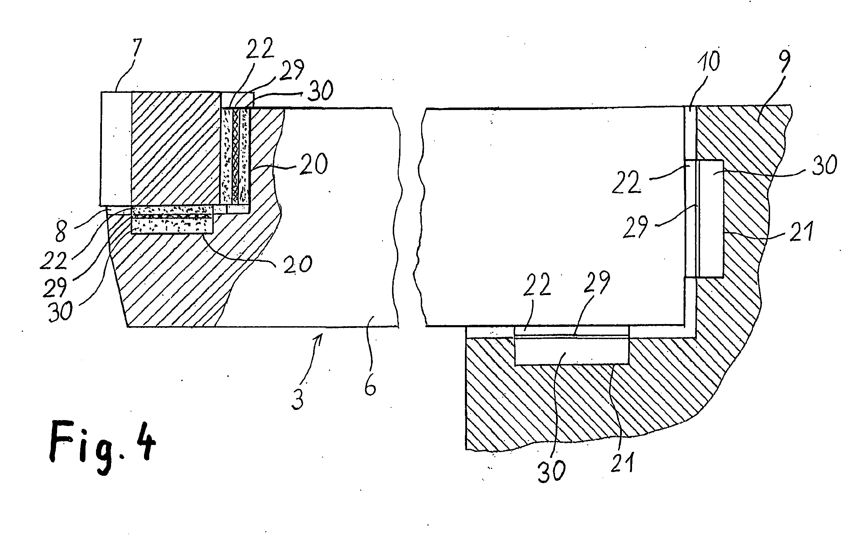

In den Figuren 3 und 4 ist ein Schneidwerkzeug 3, ein Drehmeißel, mit der erfindungsgemäßen Ausstattung mit piezokeramischen Wandlern dargestellt. Die Darstellung ist schematisch. Figur 3 zeigt die Aufsicht auf das Schneidwerkzeug. Auf dem Träger 6 ist ein Schneidelement 7 in Form einer Schneidplatte in hier nicht näher dargestellter Weise in bekannter Form in einer Ausnehmung 8 des Trägers 6 befestigt. Der Träger 6 wiederum ist in einem Werkzeughalter 9 in einer Ausnehmung 10 befestigt. Die Befestigung erfolgt so, dass eine gesteuerte Bewegung gegenüber dem Werkzeughalter 9 möglich ist.

Im vorliegenden Ausführungsbeispiel sind sowohl zwischen dem Schneidelement 7 und dem Träger 6 sowie zwischen dem Träger 6 und dem Werkzeughalter 9 Wandler angeordnet, die sich in Ausnehmungen 20 bzw. 21 abstützen. Zusätzlich zur Bestimmung der Krafteinwirkung auf das Schneidelement können auch die Krafteinwirkungen auf die Werkzeugmaschine bestimmt werden. Wegen des geringen Platzes, der zum Einbau der Wandler zur Verfügung steht, ist es vorteilhaft, die Wandler übereinander anzuordnen.

An dem Schneidelement 7 sowie dem Träger 6 liegen zunächst Sensoren 22 an, die zur Ermittlung der Krafteinwirkung auf das Schneidelement 7 bzw. den Werkzeughalter 9 und damit auf die Werkzeugmaschine bestimmt sind. Da die Sensoren der Signalerzeugung dienen, können einschichtige Piezoelemente eingesetzt werden, um die baulichen Veränderungen möglichst gering zu halten. Die in diesen Sensoren durch die Krafteinwirkung erzeugten Spannungen werden als Signale 23 zunächst an eine Signalempfänger- und Triggerschaltung 24 geleitet. Dort werden die Signale auf Grenzwertüberschreitungen geprüft und beim Überschreiten oder Unterschreiten einer zuvor festgelegten Kraft an dem Schneidelement 7 oder am Träger 6 im Werkzeughalter 9 wird ein Signal an die Regeleinrichtung 25 der Werkzeugmaschine weitergeleitet. Diese kann in den Betriebsablauf der Werkzeugmaschine eingreifen und ihren Antrieb 26, also die Drehzahl, den Vorschub 27 und/oder die Zustellung 28 ändern. Ein Blockschaltbild verdeutlicht die Signalverarbeitung.

Zwischen den Sensoren 22 und dem Träger 6 können, durch eine isolierende Stützplatte 29 voneinander getrennt, Wandler in Form von Spannungserzeugern 30 angeordnet sein. Im Gegensatz zu den Sensoren sind hier Vielschichtelemente vorteilhaft. Die durch die wechselnde Krafteinwirkung in ihnen erzeugte Spannung 31 wird zu einer Gleichrichtereinheit 32 geleitet und kann zur Versorgung elektronischer Schaltungen, beispielsweise in der Signalempfänger- und Triggerschaltung 24, genutzt werden.

In Figur 4 ist die Seitenansicht des Drehmeißels aus Figur 3 dargestellt. Gleichgeartete Funktionselemente sind deshalb mit denselben Bezugsziffern wie in Figur 3 bezeichnet. Die Befestigungselemente des Schneidelements sowie des Drehmeißels sind der Übersichtlichkeit halber weggelassen. Der Träger 6 ist im Bereich des Schneidelements 7 und der Einspannung im Werkzeughalter 9 geschnitten, um die mögliche Anordnung der Wandler unterhalb des Schneidelements und unterhalb des Trägers im Werkzeughalter zu zeigen. Im Bereich des Schneidelements sind die Wandler sowie die Stützplatten geschnitten dargestellt. Durch die Anordnung der Wandler unterhalb von Schneidelement und Träger ist es möglich, die Komponenten der Zerspankraft zu ermitteln, die senkrecht an Schneidelement und Träger angreifen.

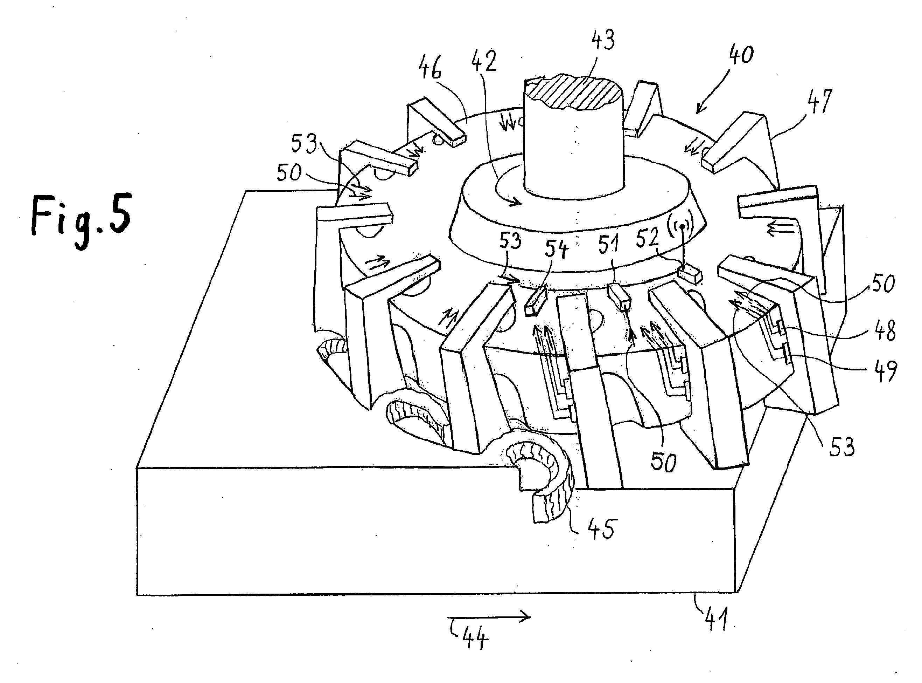

In Figur 5 ist ein Stirnfräser 40 als Schneidwerkzeug bei der Bearbeitung eines Werkstücks 41 dargestellt. Während sich der ortsfest angeordnete Fräser 40 in Richtung 42 um seine Welle 43 dreht, wird das Werkstück 41 in Richtung 44 unter dem Fräser durchgezogen, wobei Späne 45 abgehoben werden. In dem Fräskopf 46 sind auf dem Umfang in gleichen Abständen die Schneidelemente 47 angeordnet. In Drehrichtung 42 des Fräsers gesehen sind vor den Schneidelementen 47 Wandler im Fräskopf 46 angeordnet, auf denen sich die Schneidelemente 47 abstützen. Im vorliegenden Ausführungsbeispiel handelt es sich um Sensoren 48 zur Ermittlung der Krafteinwirkung auf die Schneidelemente und den Fräskopf sowie um Spannungserzeuger 49. Im vorliegenden Ausführungsbeispiel sind die Wandler nebeneinander angeordnet, aber nach der Erfindung müssen sie überreinander angeordnet sein, wie nach den Ausführungsbeispielen in den Figuren 3 und 4 dargestellt.

Weil der Fräser 40 sich dreht, ist eine Signalübertragung der von den Sensoren ermittelten Daten an eine Steuereinrichtung der Werkzeugmaschine schwierig. Aus diesem Grund ist im vorliegenden Ausführungsbeispiel eine Funkübertragung vom und zum Fräskopf 46 an einen Sender/Empfänger auf der Werkzeugmaschine vorgesehen, wie hier nicht dargestellt. Die in den Sensoren 48 durch die Krafteinwirkung erzeugten Spannungen werden als Signale 50 zunächst an eine Signalempfänger- und Triggerschaltung 51 geleitet. Dort werden die Signale auf Grenzwertüberschreitungen geprüft und beim Überschreiten oder Unterschreiten einer zuvor festgelegten Kraft an einem Schneidelement 47 wird ein Signal an die Regeleinrichtung der Werkzeugmaschine weitergeleitet. Die Signalübertragung vom sich drehenden Fräser 40 an die Werkzeugmaschine erfolgt mittels eines Senders 52. Die dazu benötigte elektrische Energie 53 wird in den als Spannungserzeuger ausgebildeten Wandlern 49 erzeugt und zu einer Gleichrichtereinheit 54 geleitet. Diese versorgt die Signalempfänger- und Triggerschaltung 51 und den Sender 52 mit der erforderlichen Spannung.

Die Anordnung der Sensoren kann beispielsweise auch auf dem Umfang von dem oder den Lagern der Welle des Fräsers in der Werkzeugmaschine erfolgen. Dadurch können die auf die Werkzeugmaschine einwirkenden Kräfte ermittelt werden, vergleichbar mit der Ermittlung der Kräfte an dem Werkzeughalter einer Drehmaschine.

## Patentansprüche

1. Spanabhebendes Schneidwerkzeug (3; 40), das aus einem Träger (6; 46) besteht, der mindestens ein Schneidelement (7; 47) trägt, wobei das Schneidwerkzeug in einem Werkzeughalter (9) beziehungsweise Lager einer Werkzeugmaschine gelagert ist und die Werkzeugmaschine mit einer Einrichtung zur Regelung (25) der spanabhebenden Bearbeitung von Werkstücken ausgerüstet ist, wobei mehrere piezokeramische Wandler als Sensoren (22; 48) vorgesehen sind und diese Wandler an mindestens einer Stelle am Schneidwerkzeug (3; 40) beziehungsweise seiner Lagerung angeordnet sind zur Beaufschlagung durch mindestens eine der Komponenten (-Fa, -Ff, -Fr) der bei der spanabhebenden Bearbeitung auftretenden Zerspankraft (-F), die auf das Schneidwerkzeug (3; 40) wirkt, und die Wandler (22, 30; 48, 49) mit der Regeleinrichtung (25) der Werkzeugmaschine verbunden sind, **dadurch gekennzeichnet, dass** mehrere piezokeramische Wandler (30,49) als Spannungserzeuger zur Spannungsversorgung von elektronischen Schaltungen vorgesehen sind und die piezokeramischen Wandler (22, 30; 48, 49) sowohl zwischen dem Schneidelement (7; 47) und dem Träger (6; 46) als auch zwischen dem Träger (6) des Schneidwerkzeugs (3) und dem Werkzeughalter (9) angeordnet sind und sich in Ausnehmungen (20) bzw. (21) abstützen und die Sensoren (22; 48) und die Spannungserzeuger (30; 49) übereinander, gegebenenfalls durch eine isolierende Stützplatte (29) voneinander getrennt, angeordnet sind.

2. Spanabhebendes Schneidwerkzeug nach Anspruch 1 oder 2, **dadurch gekennzeichnet, dass** die Spannungserzeuger (30; 49) über eine Gleichrichtereinheit (32; 54) mit den elektronischen Schaltungen (24; 51, 52) zur Spannungsversorgung verbunden sind.

## Claims

1. A material-removing cutting tool (3; 40), consisting of a carrier (6; 46) which carries at least one cutting element (7; 47), wherein the cutting tool is mounted in a tool holder (9) or bearing of a machine tool, and the machine tool is equipped with a device for controlling (25) the machining of workpieces, wherein a plurality of piezoceramic transducers are provided as sensors (22; 48), and these transducers are arranged at at least one location on the cutting tool (3; 40) or on its bearing arrangement in order to be impinged upon by at least one of the components (-Fa, -Ff, -Fr) of the cutting force (-F) which arises during the machining and acts on the cutting tool (3; 40), and the transducers (22, 30; 48, 49) are connected to the control device (25) of the machine tool, **characterised in that** a plurality of piezoceramic transducers (30; 49) are provided as voltage generators for the voltage-supply of electronic circuits, and the piezoceramic transducers (22, 30; 48, 49) are arranged both between the cutting element (7; 47) and the carrier (6; 46) and between the carrier (6) of the cutting tool (3) and the tool holder (9) and are supported in openings (20) and (21) respectively, and the sensors (22; 48) and the voltage generators (30; 49) are arranged one above the other, optionally separated from one another by an insulating support plate (29).

2. A material-removing cutting tool according to claim 1 or 2, **characterised in that** the voltage generators (30; 49) are connected to the electronic circuits (24; 51, 52) for the voltage-supply via a rectifier unit (32; 54).

## Revendications

1. Outil de coupe (3, 4) à enlèvement de copeaux, composé d'un support (6 ; 46) qui porte au moins un élément de coupe (7, 47), l'outil de coupe étant monté dans un porte-outil (9) c'est-à-dire le support d'une machine-outil qui est équipée d'un dispositif de régulation (25) de l'usinage de pièces par enlèvement de copeaux, étant précisé que plusieurs convertisseurs piezocéramiques sont prévus comme capteurs (22 ; 48) et sont disposés en au moins un point sur l'outil de coupe (3 ; 40) ou sur son support de manière à faire agir par au moins une de ses composantes (-Fa, -Ff, -Fr) la force de coupe (-F) qui intervient sur l'outil de coupe (3 ; 40) pour enlever des copeaux, les convertisseurs (22, 30 ; 48, 49) étant reliés au dispositif de régulation (25) de la machine-outil, cet outil de coupe étant **caractérisé en ce que** pour alimenter en tension des circuits électroniques, il est prévu plusieurs convertisseurs piezocéramiques (22, 30 ; 48, 49) et que ceux-ci sont disposés entre l'élément de coupe (7 ; 47) et le support (6 ; 46) ainsi qu'entre ce support (6) et le porte-outil (9) en étant logés dans des cavités (20) et (21), les capteurs (22 ; 48) et les générateurs de tension (30 ; 49) étant disposés les uns sur les autres, en étant éventuellement séparés par une plaque d'appui (29) isolante.

2. Outil de coupe selon la revendication 1, **caractérisé en ce que** les générateurs de tension (30 ; 49) sont reliés aux circuits électroniques (24 ; 51, 52), pour les alimenter en tension, par l'intermédiaire d'une unité redresseuse (32 ; 54).
